Europäisches Patentamt

European Patent Office

Office européen des brevets

(19)

(11) **EP 1 109 158 A1**

(12) **EUROPEAN PATENT APPLICATION**

(43) Date of publication:
**20.06.2001 Bulletin 2001/25**

(51) Int Cl.⁷: **G11B 5/70**, G11B 5/706,
G11B 5/73, G11B 5/738

(21) Application number: **00127244.2**

(22) Date of filing: **15.12.2000**

| | |
|---|---|
| (84) Designated Contracting States:<br>**AT BE CH CY DE DK ES FI FR GB GR IE IT LI LU<br>MC NL PT SE TR**<br>Designated Extension States:<br>**AL LT LV MK RO SI** | (72) Inventors:<br>• **Murao, Naoto, Fuji Photo Film Co., Ltd.<br>Odawara-shi, Kanagawa 250-0001 (JP)**<br>• **Araki, Hiroaki, Fuji Photo Film Co., Ltd.<br>Odawara-shi, Kanagawa 250-0001 (JP)** |
| (30) Priority: **15.12.1999 JP 35580299** | (74) Representative: **HOFFMANN - EITLE<br>Patent- und Rechtsanwälte<br>Arabellastrasse 4<br>81925 München (DE)** |
| (71) Applicant: **FUJI PHOTO FILM CO., LTD.<br>Kanagawa-ken, 250-0193 (JP)** | |

(54) **Magnetic recording medium**

(57) The present invention aims to provide a magnetic recording medium having excellent head contact and output suitable for high data transfer rates and having excellent high-speed sliding durability suitable for high-density recording.

For this purpose, a magnetic recording medium comprising a nonmagnetic lower layer containing a nonmagnetic powder and a binder and an upper layer containing a ferromagnetic powder and a binder provided on a substrate in this order is disclosed wherein the surface of said upper layer has a flexibility represented by a scratch depth of less than 300 nm but 200 nm or more and said magnetic recording medium has a Young's modulus of 800 kg/mm² or more in the tape width direction.

EP 1 109 158 A1

## Description

### Background of the Invention

1. Field of the Invention

The present invention relates to particulate magnetic recording media for high-density recording. Particularly, the present invention relates to magnetic recording media for high-density recording comprising a lower layer containing a nonmagnetic powder and a binder and an upper layer containing a ferromagnetic powder provided thereon.

2. Description of Related Art

In the field of broadcasting, single-layer particulatemetaltapesusingferromagneticmetalpowders are used. However, there are demands for broadcasting tapes for high-density recording suitable for further higher data transfer rates with the spread of high-definition broadcasting such as high-vision broadcasting or ground wave digital broadcasting.

Under these circumstances, D5HD tapes dedicated for D5 systems having a transfer rate of 270 Mbps or dedicated tapes for DVC Pro HD systems having a transfer rate of 100 Mbps are under development, but further improvements in image quality are desirable.

Typical systems providing high data transfer rates are helical recording systems, in which the rotational speed of cylinders and the number of heads should be increased for high data transfer rates. Correspondingly, magnetic recording media should have further improved linear/areal recording density as well as excellent sliding durability.

Tapes become thinner for high-density recording. However, thinner tapes are more difficult to come into contact with heads because the rotational speed of cylinders become higher for high data transfer rates as described above. In addition, small gaps normally exist between cylinders and heads incorporated therein. In cylinder rotation systems frequently used in recent digital VTRs comprising a pair of upper and lower coaxial fixed cylinders and a rotating cylinder incorporating a magnetic head, for example, tapes are drawn into a gap between the magnetic head and the axially adjacent upper and lower cylinders when the head rotates at a high speed (for example, 6, 000 rpm). As a result, a space is generated between the tape and the head gap, whereby the so-called head contact is deteriorated to cause output loss.

It is an object of the present invention to provide a magnetic recording medium having excellent head contact and output suitable for high data transfer rates and having excellent high-speed sliding durability suitable for high-density recording.

### Summary of the Invention

The present invention relates to a magnetic recording medium comprising a nonmagnetic lower layer containing a nonmagnetic powder and a binder and an upper layer containing a ferromagnetic powder and a binder provided on a substrate in this order wherein the surface of said upper layer has a flexibility represented by a scratch depth of less than 300 nm but 200 nm or more and said magnetic recording medium has a Young's modulus of 800 kg/mm$^2$ or more in the tape width direction.

It is preferred for the magnetic recording medium of the present invention that the magnetic layer has a coercivity (Hc) of 159,200 A/m (2000 oersteds) or more and that the ferromagnetic powder has an average major axis length ranging from 30 to 150 nm.

### Description of the Preferred Embodiments

In order for magnetic recording media of the present invention to have excellent head contact and improved high-speed running durability, the surface of the magnetic recording media (the surface of the upper layer) should have a moderate flexibility and the magnetic recording media should have a Young's modulus at a specific value or more in the tape width direction. The moderate flexibility means that scratch marks made with a HEIDON scratch tester on the surface of a magnetic recording medium (the surface of the upper layer) have a depth of less than 300 nm but 200 nm or more measured by an optical profiler such as TOPO-3D made by WYKO Corp., USA. If the scratch depth of the magnetic recording medium is 300 nm or more, the coated film is too flexible so that debris occur during high-speed rubbing with magnetic heads to increase error rate. If the scratch depth is less than 200 nm, the magnetic face fails to homogeneously contact with heads to increase error rate.

The Young's modulus of the magnetic recording media in the tape width direction should be 800 kg/ mm$^2$ or more. The Young's modulus of the magnetic recording media in the tape width direction is measured with Tensilon made by TOYO BALDWIN. If the Young's modulus in the tape width direction is less than 800 kg/mm$^2$, contact between the head gap and the magnetic layer is deteriorated (spacing loss) to cause output loss. So far as the object of the present invention is concerned, there is no upper limit of the Young's modulus of the magnetic recording media in the tape width direction. However, in view of physical properties specific to substrates, the upper limit of the Young's modulus of the magnetic recording media in the tape width direction is normally 1100 kg/mm$^2$ for PEN (polyethylene terephthalate) substrates, for example. Preferably, the Young's modulus of the magnetic recording media in the tape width direction is in the range of 800 - 1100 kg mm$^2$.

Typical examples of conventional magnetic tapes for DSHD (high vision) systems developed to suit high data transfer rates are single-layer metal particulate (MP) tapes having no nonmagnetic layer containing a nonmagnetic powder and a binder between the magnetic layer and the substrate. Single-layer MP tapes have a Young's modulus of somewhere 820-880 kg/mm$^2$ in the tape width direction. However, the surfaces of such magnetic tapes were rather flexible as represented by a scratch depth of about 450 nm - 500 nm for the lack of a nonmagnetic layer as described above. As a result, both of head contact and high-speed running durability were unsatisfactory. This means that head contact and high-speed running durability cannot be improved only by controlling the Young's modulus in the tape width direction at a specific range.

Generally, magnetic recording media (tapes) comprising a nonmagnetic lower layer containing a nonmagnetic powder and a binder and an upper layer containing a ferromagnetic powder and a binder provided on a substrate in this order often use a polyurethane having a relatively high Tg and undergo calendering under a heavy load after the particulate layer has been formed to ensure surface properties. As a result, the surfaces of the tapes are rather hard as represented by a scratch depth of 100 nm - 150 nm measured above. Thus, the "head contact" with heads under high-speed running (rotation) was unsatisfactory and output was also insufficient. It is natural that such tapes fail to provide satisfactory "head contact" because they were not developed to suit high data transfer rates.

Various methods can be applied to control the scratch depth on the surfaces of magnetic recording media (the surface of the upper magnetic layer) at a specific range. The scratch depth can be controlled at the range defined by the present invention by, for example, changing the ratio of three elements (vinyl chloride/urethane/hardener) in binder resins in the upper (magnetic) layer and/or lower (nonmagnetic) layer, or changing the P/B ratio (the ratio of inorganic powders such as magnetic materials to binder resins), or using a resin containing a polar functional group as a binder to improve dispersibility of magnetic powders, or increasing the modulus of elasticity or glass transition point (Tg) of binder resins or the like. Alternatively, the scratch depth can also be controlled by plasticizing binders with larger amounts of lubricants to improve calendering moldability. The scratch depth can also be controlled by changing the natures and/or amounts of kneading solvents for preparing magnetic coating liquids for upper layers or coating liquids for lower layers to change the kneading degree. The scratch depth can also be controlled by changing calendering conditions such as temperature, pressure or the hardness of calender rolls or introducing a metal calender roll.

More specifically, magnetic recording media having a scratch depth in the range defined by the present invention on the surfaces of the magnetic recording media (the surface of the upper magnetic layer) can be obtained by using a polyurethane having a high Tg (for example, 90 °C) as a binder in the upper layer (magnetic layer) and a low Tg (for example, 60 °C) as a binder in the lower layer (nonmagnetic layer) and easing calendering conditions as shown in the examples below.

The Young's modulus of magnetic recording media in the tape width direction can be controlled at 800 kg/mm$^2$ or more by using a substrate having a specific Young's modulus in the tape width direction. The Young's moduli of the upper (magnetic) layer and the lower (nonmagnetic) layer forming a magnetic recording medium in the tape width direction are typically lower than that of the substrate. Therefore, the Young's modulus of the magnetic recording medium in the tape width direction is lower than the Young's modulus of the substrate in the tape width direction. Thus, the Young's modulus of the magnetic recording medium in the tape width direction can be controlled at a specific range by selecting a substrate having an appropriate Young's modulus in the tape width direction taking into account the loss of the Young's modulus in the tape width direction due to the upper (magnetic) layer and the lower (nonmagnetic) layer. Commercially available substrates having a Young's modulus ranging from 800 to 1200 kg/mm$^2$ in the tape width direction include PEN (polyethylene naphthalate).

The magnetic layer of magnetic recording media of the present invention suitably has a coercivity (Hc) of 159,200 A/m (2000 Oe) or more, more preferably 175,120-278,600 A/m (2200-3500 Oe). Magnetic recording media having a higher recording density can be obtained by using a magnetic layer having a coercivity (Hc) of 159,200 A/m (2000 Oe) or more.

In magnetic recording media of the present invention, the ferromagnetic powder preferably has an average major axis length ranging from 30 to 150 nm. The average major axis length of the ferromagnetic powder ranging from 30 to 150 nm has the advantage that a smooth magnetic face can be ensured to reduce spacing loss between the tape and the head gap and to produce higher output.

The magnetic layer of magnetic recording media of the present invention suitably has an average surface roughness relative to the center plane (SRa) ranging from 1.0 to 6.0 nm, preferably 1.0 to 5.0 nm, most preferably 1.0 to 4.0 nm measured by an optical profiler. If said average surface roughness relative to the center plane (SRa) is 6.0 nm or less, the spacing loss between the magnetic recording medium and the head can be controlled to readily provide high output and low noise. Said average surface roughness relative to the center plane (SRa) is preferably 1.0 nm or more to limit the friction coefficient against fixed heads or fixed guides, thus providing stable running performance.

[Magnetic layer]

According to the present invention, the nonmagnetic lower layer and the thin magnetic layer (hereinafter also referred to as "upper layer" or "upper magnetic layer") can be applied on both sides or one side of the substrate. The upper magnetic layer can be applied after the lower layer is applied and still wet (wet on wet) or after dried (wet on dry).

[Ferromagnetic powders]

Ferromagnetic powders used in the present invention are preferably ferromagnetic alloy powders based on $\alpha$-Fe. In addition to specific atoms, these ferromagnetic powders may contain other atoms such as Al, Si, S, Sc, Ca, Ti, V, Cr, Cu, Y, Mo, Rh, Pd, Ag, Sn, Sb, Te, Ba, Ta, W, Re, Au, Hg, Pb, Bi, La, Ce, Pr, Nd, Sm, P, Co, Mn, Zn, Ni, Sr, B. Especially preferred ferromagnetic powders contain at least one of Al, Si, Ca, Y, Ba, La, Nd, Sm, Co, Ni, B, more preferably at least one of Co, Y, Al, Nd, Sm in addition to $\alpha$-Fe. The Co content is preferably 0 at% or more but 40 at% or less, more preferably 5 at% or more but 35 at% or less, most preferably 10 at% or more but 35 at% or less on the basis of Fe. The Y content is preferably 1.5 at% or more but 12 at% or less, more preferably 3 at% or more but 10 at% or less, most preferably 3 at% or more but 9 at% or less. The Al content is preferably 1.5 at% or more but 13 at% or less, more preferably 3 at% or more but 11 at% or less, most preferably 4 at% or more but 10 at% or less. These ferromagnetic powders may be preliminarily treated with dispersants, lubricants, surfactants, antistatic agents or the like described later before they are dispersed, as specifically described in JP-B Nos. 14090/69, 18372/70, 22062/72, 22513/72, 28466/71, 38755/71, 4286/72, 12422/72, 17284/72, 18509/72, 18573/72, 10307/64 and 39639/73 and US Patent Nos. 3026215, 3031341, 3100194, 3242005 and 3389014.

Ferromagnetic powders may contain a small amount of a hydroxide or oxide. Suitable ferromagnetic powders are obtained by known processes, including: reducing a composite organic acid salt (typically, oxalate) with a reducing gas such as hydrogen; reducing an iron oxide with a reducing gas such as hydrogen into Fe or Fe-Co particles or the like; thermally decomposing a metal carbonyl compound; reducing an aqueous ferromagnetic metal solution with a reducing agent such as sodium boron hydride, hypophosphite or hydrazine; or evaporating a metal in a low-pressure inert gas into fine powder. Thus obtained ferromagnetic powders can be used after subjected to any of known slow oxidation treatments, such as dipping in an organic solvent followed by drying; dipping in an organic solvent and then feeding an oxygen-containing gas to form an oxide film on the surface followed by drying; or controlling the partial pressures of an oxygen gas and an inert gas to form an oxide film on the surface without using an organic solvent.

Ferromagnetic powders used in the upper (magnetic) layer of the present invention suitably have a specific surface area of 45-80 $m^2$/g, preferably 50-70 $m^2$/g measured by the BET method. Noise becomes high below 45 $m^2$/g while surface profile tends to be deteriorated above 80 $m^2$/g. Ferromagnetic powders in the upper (magnetic) layer of the present invention suitably have a crystallite size of 80-180 angstroms, preferably 100-180 angstroms, more preferably 110-175 angstroms. Ferromagnetic powders preferably have an average major axis length of 30-150 nm, more preferably 30-120 nm as described above. Ferromagnetic powders preferably have an aspect ratio of 3-15, more preferably 5-12. The ferromagnetic powders have a saturation magnetization (as) of 100-200 A.$m^2$/kg, preferably 120-180 A.$m^2$/kg.

Ferromagnetic powders preferably have a moisture content of 0.01-2 % by weight. The moisture content of ferromagnetic powders is preferably optimized depending on the nature of the binder. The pH of ferromagnetic powders is preferably optimized depending on the binder used in combination, in the range of 4-12, preferably 6-10. If desired, ferromagnetic powders may be treated with Al, Si, P or oxides thereof or the like so that the surfaces may be partially coated with them. The amount thereof is normally 0.1-10 % by weight of the ferromagnetic powders. Surface treatments are preferred because adsorption of lubricants such as fatty acids becomes 100 mg/$m^2$ or less. Ferromagnetic powders may contain soluble inorganic ions such as Na, Ca, Fe, Ni or Sr. Preferably, they are essentially free from these ions, but their characteristics are scarcely affected at 200 ppm or less. Ferromagnetic powders used in the present invention preferably have less voids, such as 20 % by volume or less, more preferably 5 % by volume or less. Ferromagnetic powders may have any of grain-, rice grain- and spindle-like shapes so far as the particle size shown above is satisfied. The SFD (switching field distribution) of ferromagnetic powders themselves is preferably lower, and preferably 0.8 or less. Ferromagnetic powders preferably have a narrow Hc distribution. SFDs of 0.8 or less are preferred for high-density digital magnetic recording because good electromagnetic characteristics, high output and sharp magnetization inversion are obtained with decreased peak shifts. Hc distribution of ferromagnetic powders can be narrowed by improving the particle size distribution of goethite or preventing sintering.

[Nonmagnetic lower layer]

The nonmagnetic lower layer is explained in detail below. The nonmagnetic lower layer of the present invention comprises a nonmagnetic powder and a resin. The nonmagnetic powder is, for example, an inorganic or organic powder. Although inorganic powders are generally nonmagnetic powders, the nonmagnetic lower layer may also contain a magnetic powder in a range having substantially no influence on electromagnetic characteristics in addition to the nonmagnetic inorganic powder.

The above nonmagnetic powder can be selected from inorganic compounds such as metal oxides, metal carbonates, metal sulfates, metal nitrides, metal carbides and metal sulfides. Suitable inorganic compounds include, for example, $\alpha$-alumina having an $\alpha$-conversion degree of 90% or more, ($\beta$-alumina, $\gamma$-alumina, $\theta$-alumina, silicon carbide, chromium oxide, cerium oxide, $\alpha$-iron oxide, hematite, goethite, corundum, silicon nitride, titanium carbide, titanium dioxide, silicon dioxide, tin oxide, magnesium oxide, tungsten oxide, zirconium oxide, boron nitride, zinc oxide, calcium carbonate, calcium sulfate, barium sulfate and molybdenum disulfide, which can be used alone or in combination. In respects of the narrow particle size distribution, abundance of function-conferring means or the like, especially preferred are titanium dioxide, zinc oxide, iron oxide and barium sulfate, among whichtitaniumdioxideanda-ironoxidearemorepreferred. These nonmagnetic powders preferably have an average particle diameter of 0.005-2 μm, but the same effect can be obtained by combining nonmagnetic powders having different particle sizes or by widening the particle diameterdistributionofevenasinglenonmagneticpowder, if necessary. Nonmagnetic powders preferably have an average particle diameter of 0.01 μm - 0.2 μm. Particularly when nonmagnetic powders are granulated metal oxides, the average particle size is preferably 0.005 to 0.08 μm. Acicular metal oxides preferably have an average major axis length of 0.3 μm or less, more preferably 0.2 μm or less. The tap density is 0.05-2 g/ml, preferably 0.2- 1.5 g/ml. The moisture content of nonmagnetic powders is 0.1-5 % by weight, preferably 0.2-3 % by weight, more preferably 0.3-1.5 % by weight. The pH of nonmagnetic powders is normally 2-11, more preferably 7-10. The specific surface area of nonmagnetic powders is 1-100 m$^2$/g, preferably 5-80 m$^2$/g, more preferably 10-70 m$^2$/g. The crystallite size of nonmagnetic powders is preferably 0.004 μm - 1 μm, more preferably 0.04 μm - 0.1μm. The oil absorption utilizing dibutyl phthalate (DBP) is 5-100 m1/100g, preferably 10-80 ml/l00g, more preferably 20-60 ml/100g. The specific gravity is 1-12, preferably 3-6. They may have any of acicular, spherical, polygonal and plate-like shapes. The Mohs hardness is preferably 4 or more but 10 or less. The SA (stearic acid) absorption of nonmagnetic powders is 1-20 μmol/m$^2$, preferably 2-15 μmol/ m$^2$, more preferably 3-8 μmol/ m$^2$. These nonmagnetic powders are preferably surface-treated to contain Al$_2$O$_3$, SiO$_2$, TiO$_2$, ZrO$_2$, SnO$_2$, Sb$_2$O$_3$ or ZnO on their surfaces. Especially preferred for dispersibility are Al$_2$O$_3$, SiO$_2$, TiO$_2$ and ZrO$_2$, more preferably Al$_2$O$_3$, SiO$_2$ and ZrO$_2$. These may be used in combination or alone to form a surface-coating layer by coprecipitation or initially depositing alumina on the surfaces of powders and then silica or vice versa depending on the purpose. The surface-coating layer may be a porous for some purposes, but preferably homogeneous and dense in general.

Specific examples of nonmagnetic powders used in the lower layer of the present invention include Nanotite manufactured by Showa Denko K.K.; HIT-100 and ZA-G1 manufactured by Sumitomo Chemical Co., Ltd.; $\alpha$-hematite DPN-250, DPN-250BX, DPN-245, DPN-270BX, DPN-500BX, DBN-SA1 and DBN-SA3 manufactured by Toda Kogyo Corp.; titanium oxide TTO-51B, TTO-55A, TTO-55B, TTO-55C, TTO-55S, TTO-55D, SN-100, $\alpha$-hematite E270, E271, E300 and E303 manufacturedby Ishihara Sangyo Kaisha, Ltd.; STT-4D, STT-30D, STT-30 and STT-65C and $\alpha$-hematite $\alpha$-40 manufactured by Titan Kogyo K.K.; MT-100S, MT-100T, MT-150W, MT-500B, MT-600B, MT-100F and MT-500HD manufactured by Tayca corporation; FINEX-25, BF-1, BF-10, BF-20 and ST-M manufactured by Sakai Chemical Industry Co., Ltd.; DEFIC-Y and DEFIC-R manufactured by Dowa Mining Co., Ltd.; AS2BM and Ti02P25 manufactured by Nippon Aerosil Co., Ltd.; 100A and 500A manufactured by Ube Industries, Ltd.; as well as sintered products thereof. Especially preferred nonmagnetic powders are titanium dioxide and $\alpha$-iron oxide.

Carbon blacks can be mixed into the lower layer of the present invention to attain known effects such as lowered Rs or decreased light transmittance. Suitable carbon blacks include furnace blacks for rubber use, thermal blacks for rubber use, carbon blacks for coloring agents, acetylene blacks or the like. Carbon blacks in the lower layer should have the below-mentioned characteristics optimized depending on the desired effect and may be more effective by combination.

Carbon blacks in the lower layer have a specific surface area of 100-500 m$^2$/g, preferably 150- 400 m$^2$/g and a DBP oil absorption of 20-400 ml/100 g, preferably 30-400 ml/100g. The particle size of carbon blacks is 5 nm - 80 nm, preferably 10-50 nm, more preferably 10-40 nm. Carbon blacks preferably have a pH of 2-10, amoisture content of 0.1-10 % by weight, and a tap density of 0.1-1 g/ml. Specific examples of carbon blacks used in the present invention include BLACK PEARLS 2000, 1300, 1000, 900, 800, 880, 700 and VULCAN XC-72 manufactured by Cabot Corporation; #3050B, #3150B, #3250B, #3750B, #3950B, #950, #650B, #970B, #850B, MA-600, MA-230, #4000 and #4010 manufactured by Mitsubishi Chemical Corporation; CONDUCTEX SC, RAVEN 8800, 8000, 7000, 5750, 5250, 3500, 2100, 2000, 1800, 1500, 1255 and 1250 manufactured by Columbian Chemicals Company; and Ketjen Black EC manufactured by Akzo Nobel. These carbon blacks may be surface-treated with a dispersant or grafted with a resin or partially graphitized on their surfaces. Alternatively, they may be dispersed in a binder before they are added to a coating. These carbon blacks can be used in the range not exceeding 50 % by weight of the above inorganic powders and not exceeding 40 % by weight of the total weight of the nonmagnetic layer. These carbon blacks can be used alone or in combination. As for carbon blacks that can be used in the present invention, see "Carbon Black Handbook" edited by Carbon Black Association, for example.

The lower layer can also contain organic powders for some purposes. Such organic powders include acrylic-styrene resin powders, benzoguanamine resin powders, melamine resin powders and phthalocyanine pigments as well as polyolefin resin powders, polyester resin powders, polyamide resin powders, polyimide resin powders and polyfluoroethylene resins, which can be prepared by the processes described in JP-A Nos. 18564/87 and 255827/85.

Binder resins (amounts and natures), the natures and amounts of lubricants, dispersants and additives, solvents and dispersion methods in the lower layer can be determined by known techniques relating to magnetic layers.

[Binders]

Binders used in the present invention include known thermoplastic resins, thermosetting resins, reactive resins and mixtures thereof. Suitable thermoplastic resins have a glass transition temperature of -100 to 150 °C, a number average molecular weight of 1,000 to 200,000, preferably 10,000 to 100,000, and a polymerization degree of about 50 to 1,000.

Examples thereof include polymers or copolymers containing vinyl chloride, vinyl acetate, vinyl alcohol, maleic acid, acrylic acid, acrylates, vinylidene chloride, acrylonitrile, methacrylic acid, methacrylates, styrene, butadiene, ethylene, vinyl butyral, vinyl acetal, vinyl ethers or the like as base units; polyurethane resins; and various rubber-based resins. Suitable thermosetting resins or reactive resins include phenol resins, epoxy resins, polyurethane curing resins, urea resins, melamine resins, alkyd resins, acrylic reactive resins, formaldehyde resins, silicone resins, epoxy-polyamide resins, mixtures of polyester resins and isocyanate prepolymers, mixtures of polyester polyols and polyisocyanates, mixtures of polyurethanes and polyisocyanates and the like. These resins are described in detail in "Plastic Handbook", published by Asakura Shoten. Known electron radiation curing resins can also be used in various layers. These resins can be used alone or in combination. Preferred are combinations of a polyurethane resin or a polyisocyanate with at least one member selected from vinyl chloride resins, vinyl chloride-vinyl acetate copolymers, vinyl chloride-vinyl acetate-vinyl alcohol copolymers, vinyl chloride-vinyl acetate-maleic anhydride copolymers.

Polyurethane resins may have a known structure such as polyester-polyurethane, polyether-polyurethane, polyether-polyester-polyurethane, polycarbonate-polyurethane, polyester-polycarbonate-polyurethane, polycaprolactone-polyurethane or the like. If desired, all the binders shown here may preferably contain at least one polar group selected from $-COOM$, $-SO_3M$, $-OS0_3M$, $-P=O(OM)2$, $-O-P=O(OM)_2$ (where M represents a hydrogen a tom or an alkali metal), $-OH$, $-NR2$, $=N*R_3$ (where R represents a hydrocarbon group), an epoxy group, $-SH$, $-CN$ or the like introduced via copolymerization or addition reaction to obtain more excellent dispersibility and durability. The amount of such polar groups is preferably $10^{-1}$ to $10^{-8}$ mol/g, more preferably $10^{-2}$ to $10^{-6}$ mol/g.

Specific examples of these binders used in the present invention include VAGH, VYHH, VMCH, VAGF, VAGD, VROH, VYES, VYNC, VMCC, XYHL, XYSG, PKHH, PKHJ, PKHC and PKFE manufactured by Union Carbide Corporation; MPR-TA, MPR-TA5, MPR-TAL, MPR-TSN, MPR-TMF, MPR-TS, MPR-TM and MPR-TAO manufactured by Nissin Chemical Industry Co., Ltd.; 1000W, DX80, DX81, DX82, DX83 and 100 FD manufactured by Denki Kagaku Kogyo K.K. ; MR-104, MR-105, MR110, MR100, MR555 and 400X-110A manufactured by Nippon Zeon Co., Ltd.; Nippollan N2301, N2302 and N2304 manufactured by Nippon Polyurethane Industry Co., Ltd.; Pandex T-5105, T-R3080, T-5201, Burnock D-400, D-210-80, Crisvon 6109 and 7209 manufactured by Dainippon Ink & Chemicals, Incorporated; Vylon UR8200, UR8300, UR-8700, RV530 and RV280 manufactured by Toyobo Co., Ltd.; Daipheramine 4020, 5020, 5100, 5300, 9020, 9022 and 7020 manufactured by Dainichiseika Color & Chemicals Mfg. Co., Ltd.; MX 5004 manufactured by Mitsubishi Chemical Corporation; SunpreneSP-150 manufactured by Sanyo Chemical Industries, Ltd.; Salan F310 and F210 manufactured by Asahi Chemical Industry Co., Ltd. and the like.

Binders in the lower layer and the magnetic layer of the present invention are used in the range of 5-50 % by weight, preferably 10-30 % by weight of nonmagnetic powders or magnetic powders. Preferably, 5-30 % by weight of vinyl chloride resins, 2-20 % by weight of polyurethane resins and 2-20 % by weight of polyisocyanates are used in combination, but polyurethanes alone or combinations of only polyurethanes and isocyanates may be used when head corrosion occurs by minor dechlorination. Polyurethanes used in the present invention preferably have a glass transition temperature of -50 to 150 °C, preferably 0 °C to 100 °C, an elongation at break of 100 to 2,000 %, a breaking stress of 0.05 to 10 Kg/mm2, and a yield stress of 0.05 to 10 Kg/mm2.

Magnetic recording media of the present invention consist of two or more layers. Therefore, the amount of binders, the amounts of vinyl chloride resins, polyurethane resins, polyisocyanates or other resins in the binders, the molecular weight of each resin forming magnetic layers, the amount of polar groups or the aforementioned physical properties of resins or other factors can naturally vary or should rather be optimized in lower layers and magnetic layers, if necessary, by applying known techniques relating to multilayer magnetic systems. For example, varying amounts of binders may be added to various layers by increasing the amount of binders in magnetic layers to reduce scuff marks on the surfaces of the magnetic layers or increasing the amount of binders in lower layers to provide flexibility for better head touch. However, the surface of upper layers should have a flexibility represented by a scratch depth of less than 300 nm but 200 nm or more.

Suitable polyisocyanates for use in the present invention include isocyanates such as tolylene diisocyanate, 4,4'-diphenylmethane diisocyanate, hexamethylene diisocyanate, xylylene diisocyanate, naphthylene-l,5-diisocyanate, o- toluidine diisocyanate, isophorone diisocyanate, triphenylmethane triisocyanate; products of these isocyanates with polyalcohols; or polyisocyanates produced by condensation of isocyanates. These isocyanates are commercially available under trade names Coronate L, Coronate HL, Coronate 2030, Coronate 2031, Millionate MR and Millionate MTL from Nippon Polyurethane Industry Co. Ltd.; Takenate D-102, Takenate D-110N, Takenate D-200 and Takenate D-202 from Takeda Chemical Industries, Ltd.; Desmodule L, Desmodule IL, Desmodule N and Desmodule HL from Sumitomo Bayer Urethane Co., Ltd. etc., which may be used alone or as a combination of two or more by taking advantage of the difference in curing reactivity.

[Carbon blacks and abrasives]

Carbon blacks used in the magnetic layer of the present invention include furnace blacks for rubber use, thermal blacks for rubber use, carbon blacks for coloring agents, acetylene blacks or the like. They preferably have a specific surface area of 5-500 $m^2$/g, a DBP oil absorption of 10-400 $cm^3$/100 g, an average particle diameter of 5 nm-300 nm, a pH of 2-10, a moisture content of 0.1-10 % by weight and a tap density of 0.1-1 g/$cm^3$. Specific examples of carbon blacks used in the present invention include BLACK PEARLS 2000, 1300, 1000, 900, 905, 800, 700 and VULCAN XC-72 manufactured by Cabot Corporation; #80, #60, #55, #50 and #35 manufactured by Asahi Carbon Co., Ltd.; #2400B, #2300, #900, #100, #30, #40 and #10B manufactured by Mitsubishi Chemical Corporation; CONDUCTEX SC, RAVEN 150, 50, 40 and 15 and RAVEN-MT-P manufactured by Columbian Chemicals Company; and Ketjen Black EC manufactured by Nippon EC. These carbon blacks may be surface-treated with a dispersant or grafted with a resin or partially graphitized on their surfaces. Alternatively, they may be dispersed in a binder before they are added to a magnetic coating. These carbon blacks can be used alone or in combination. When a carbon black is used, it preferably represents 0.1-30 % by weight of the amount of magnetic materials. Carbon blacks have an antistatic effect, friction coefficient-lowering effect, light protection-conferring effect, film strength-improving effect or the like on magnetic layers depending on the carbon blacks specifically used. Therefore, these carbon blacks used in the present invention can naturally vary in nature, amount and combination from upper magnetic to lower layers to meet the purpose on the basis of the characteristics shown above such as particle size, oil absorption, conductivity or pH. As for carbon blacks that can be used in magnetic layers of the present invention, see "Carbon Black Handbook" edited by Carbon Black Association, for example.

Suitable abrasives in the present invention are typically known materials having a Mohs hardness of 6 or more such as α-alumina having an α-conversion degree of 90% or more, (β-alumina, silicon carbide, chromium oxide, cerium oxide, α-iron oxide, corundum, silicon nitride, silicon carbide, titanium carbide, titanium dioxide, silicon dioxide, boron nitride and diamond, which can be used alone or in combination. Complexes of these abrasives may also be used (which are obtained by surface-treating one abrasive with another abrasive) . These abrasives may sometimes contain other compounds or elements than main components, but the effect is not affected so far as main components represent 90% by weight or more. These abrasives preferably have an average particle diameter of 0.01-2 pm, with narrower particle size distribution being especially preferred for increasing electromagnetic characteristics. The same effect can be obtained by combining abrasives having different particle sizes or by widening the particle diameter distribution of even a single abrasive, if necessary, to improve durability. Abrasives preferably have a tap density of 0.3-2 g/$cm^3$, a moisture content of 0.1-5 % by weight, a pH of 2-11 and a specific surface area of 1-30 $m^2$ /g. Abrasives used in the present invention may have any of acicular, spherical and cubic shapes, but preferably have a partially angular shape to provide high abrasive properties. Specific examples include AKP-12, AKP-15, AKP-20, AKP-30, AKP-50, HIT-20, HIT-30, HIT-55, HIT-60A, HIT-70, HIT-80 and HIT-100 manufactured by Sumitomo Chemical Co., Ltd.; ERC-DBM, HP-DBM and HPS-DBM manufactured by Reynolds; WA10000 manufactured by Fujimi Abrasives; UB20 manufactured by C.Uyemura & Co., Ltd.; G-5, Chromex U2 and Chromex U1 manufactured by Nippon Chemical Industrial Co., Ltd.; TF-100 and TF-140 manufactured by Toda Kogyo Corp.; Beta Random Ultrafine manufactured by IBIDEN Co., Ltd.; and B-3 manufactured by Showa Kogyo K.K. If desired, these abrasives may also be added to lower layers to control surface profile or projection state of abrasives. The particle diameters and amounts of these abrasives added to magnetic layers and lower layers can obviously be adjusted to optimal values.

[Additives]

Additives used in magnetic layers and lower layers of the present invention have a lubricating effect, antistatic effect, dispersing effect, plasticizing effect or the like. Suitable additives include molybdenum disulfide; tungsten-graphite disulfide; boron nitride; graphite fluoride; silicone oils; silicone shaving a polar group; fatty acid-modified silicones; fluorine-containing silicones; fluorine-containing alcohols; fluorine-containing esters; polyolefins; polyglycols; alkyl phosphoric esters and alkali metal salts thereof; alkyl sulfuric esters and alkali metal salts thereof; polyphenyl ethers; phenylphosphonic acid; $\alpha$-naphthylphosphoric acid; phenylphosphoric acid; diphenylphosphoric acid; p-ethylbenzenephosphonic acid; phenylphosphinic acid; aminoquinones; silan coupling agents; titanium coupling agents; fluorine-containing alkyl sulfuric esters and alkali metal salts thereof; C10-24 monobasic fatty acids optionally branched and optionally containing an unsaturated bond and metal (e.g., Li, Na, K, Cu) salts thereof; C12-22 monohydric, dihydric, trihydric, tetrahydric, pentahydric and hexahydric alcohols optionally branched and optionally containing an unsaturated bond; C12-22 alkoxy alcohols optionally branched and optionally containing an unsaturated bond; monofatty acid esters or difatty acid esters or trifatty acid esters formed from a C10-24 monobasic fatty acid optionally branched and optionally containing an unsaturated bond and any one of C2-12 monohydric, dihydric, trihydric, tetrahydric, pentahydric and hexahydric alcohols optionally branched and optionally containing an unsaturated bond; fatty acid esters of monoalkyl ethers of alkylene oxide polymers; C8-22 fatty acid amides; and C8-22 aliphatic amines.

Specific examples of these additives include fatty acids such as capric acid, caprylic acid, lauric acid, myristic acid, palmitic acid, stearic acid, behenic acid, oleic acid, elaidic acid, linolic acid, linolenic acid, isostearic acid; esters such as butyl stearate, octyl stearate, amyl stearate, iso-octyl stearate, butyl myristate, octyl myristate, butoxyethyl stearate, butoxydiethyl stearate, 2-ethylhexyl stearate, 2-octyldodecyl palmitate, 2-hexyldodecyl palmitate, isohexadecyl stearate, oley oleate, dodecyl stearate, tridecyl stearate, oleyl erucate, neopentylglycol didecanoate, dioleyl ethyleneglycolate; alcohols such as oleyl alcohol, stearyl alcohol, lauryl alcohol. Other suitable additives include nonionic surfactants based on alkylene oxides, glycerins, glycidols or alkyl phenol-ethylene oxide adducts, etc; cationic surfactants based on cyclic amines, ester amides, quaternary ammonium salts, hydantoin derivatives, heterocycles, phosphonium or sulfoniums, etc; anionic surfactants containing an acidic group such as carboxylic acid, sulfonic acid, phosphoric acid, sulfate ester and phosphate ester groups; and ampholytic surfactants based on amino acids, amino sulfonic acids, sulfuric or phosphoric esters of amino alcohols or alkyl betaines. These surfactants are described in detail in "Surfactants Handbook" (published by Sangyo Tosho Co., Ltd.). These lubricants, antistatic agents or the like need not be 100 % pure but may contain impurities such as isomers, unreacted materials, side reaction products, decomposition products and oxides in addition to main components. The content of these impurities is preferably 30 % by weight or less, more preferably 10 % by weight or less.

These lubricants and surfactants used in the present invention have different physical actions, and the natures, amounts and ratios of lubricants used in combination for synergistic effect should be optimally determined depending on the purpose. For example, fatty acids having different melting points or esters having different boiling points or melting points or polarities can be used in lower and magnetic layers to control bleed-through, or the amount of surfactants can be adjusted to improve coating stability, or the amount of lubricants added to lower layers can be increased to improve a lubricating effect, though these examples are not limitative as a matter of course. Generally, the total amount of lubricants is selected in the range of 0.1-50 % by weight, preferably 2-25 % by weight of ferromagnetic powders in magnetic layers or nonmagnetic powders in lower layers.

Additives used in the present invention may be totally or partially added in any step of the preparation process of magnetic and nonmagnetic coatings. For example, they may be mixed with magnetic materials before kneading, or may be added during the step where magnetic materials, binders and solvents are kneaded, or may be added during or after dispersion, or may be added immediately before coating. Some purposes may be attained by partially or totally applying additives by simultaneous or sequential coating after magnetic layers have been applied. For other purposes, lubricants may be applied on the surface of magnetic layers after calendering (heat and pressure treatment with calender rolls) or slitting.

Organic solvents used in the present invention are known, as described in JP-A No. 68453/94, for example.

[Layer structure]

Magnetic recording media of the present invention have the following thickness structure. The substrate suitably has a thickness of 4-10 $\mu$m, preferably 7-9 $\mu$m.

An undercoat layer may be provided between the substrate and the lower layer to improve adhesion. The undercoat layer has a thickness of 0.005-0.5 $\mu$m, preferably 0.01-0.5 $\mu$m.

Magnetic recording media of the present invention can be provided with a lower layer and a magnetic layer on one side of the substrate and a back coat layer on the other side. The thickness of the back coat layer is 0.1-1 $\mu$m, preferably 0.3-0.7 $\mu$m. These undercoat layer and back coat layer are known.

In magnetic recording media of the present invention, the thickness of the magnetic layer is optimized depending on the saturation magnetization and head gap length of the head used or the bandwidth of recording signals, but preferably 0.03-0.6 μm, more preferably 0.1-0.4 μm. The magnetic layer may be separated into two or more magnetic sublayers and known magnetic multilayer structures can be applied.

In magnetic recording media of the present invention, the thickness of the lower (nonmagnetic) layer is 0.2 μm or more but 5.0 μm or less, preferably 0.3 μm or more but 3.0 μm or less, more preferably 0.5 μm or more but 2.5 μm or less.

[Substrate]

The substrate used in the present invention is preferably nonmagnetic. Suitable nonmagnetic substrates may be known films of polyesters such as polyethylene terephthalate, polyethylene naphthalate; polyolefins; cellulose triacetate; polycarbonates; polyamides (including aliphatic polyamides and aromatic polyamides such as aramids); polyimides; polyamides-imides; polysulfons; polybenzoxazoles. High-strengthsubstrates such as polyethylene naphthalate or polyamides are preferred. If desired, laminated substrates as shown in JP-A No. 224127/91 can also be used to provide a magnetic face and a base face having different surface roughnesses. These substrates may be preliminarily subjected to corona discharge treatment, plasma treatment, adhesion-enhancing treatment, heat treatment, dust removal or the like. However, substrates are appropriately selected so that magnetic recording media of the present invention may have a Young's modulus of 800 kg/mm$^2$ or more in the tape width direction. In these respects, polyethylene naphthalate is most preferred.

Suitable substrates for use in the present invention have an average surface roughness relative to the center plane (Ra) of 8.0 nm or less, preferably 5.0 nm or less measured by the MIRAU method using a surface profilometer TOPO-3D made by WYKO Corp. Preferably, substrates not only have a small average surface roughness relative to the center plane but also are free from large projections of 0.3 μm or more. The surface roughness profile can be freely controlled by changing the size and amount of fillers added to substrates. Examples of these fillers include oxides or carbonates of Ca, Si, Ti or the like and acrylic or other organic fine powders. Preferably, substrates have a maximum height Srmax of 1 pm or less, a ten point average roughness SRz of 0.5 μm or less, a peak height relative to the center plane SRp of 0.5 μm or less, a valley depth relative to the center plane SRv of 0.5 μm or less, an areal percentage relative to the center plane SSr of 10 % or more but 90 % or less, and an average wavelength Sλa of 5 pm or more but 300 μm or less. Surface projection distribution of these substrates can be freely controlled by fillers in the range of 0 to 2000 projections of 0.01 pm to 1 μm in size per 0.1 mm$^2$.

Nonmagnetic substrates used in the present invention preferably have an F-5 value of 5-50 Kg/mm$^2$, and a thermal shrinkage of 0.5 % or less, more preferably 0.2 % or less at 80 °C for 30 minutes. The break strength is preferably 5-100 kg/mm$^2$.

[Preparation process]

The process for preparing magnetic coatings or coatings for lower layers of magnetic recording media of the present invention comprises at least a kneading step, a dispersing step and a mixing step optionally inserted before or after the former steps. Each stepmaybe separated into two or more stages. All the materials used in the present invention such as ferromagnetic powders, nonmagnetic powders, binders, carbon blacks, abrasives, antistatic agents, lubricants and solvents may be added at the beginning of or during any steps. Moreover, divided portions of each material may be added in two or more steps. For example, divided portions of polyurethane may be added at the kneading step, the dispersing step, and the mixing step for controlling viscosity after dispersion. Known manufacturing techniques can be applied as a part of the process to achieve the object of the present invention. Preferably, an apparatus having a high kneading power such as open kneader, continuous kneader, pressure kneader or extruder is used during the kneading step. When a kneader is used, magnetic powders or nonmagnetic powders are kneaded with all or a part of binders (preferably 30 % by weight or more of the total binders) in the range of 15-500 parts by weight per 100 parts by weight of the magnetic powders. The details of these kneading processes are described inJP-A No. 106338/89 and 79274/89. Magnetic layer liquids and lower layer liquids are dispersed with glass beads, preferably dispersion media having a high specific gravity such as zirconia beads, titania beads, and steel beads. These dispersion media are used at optimized particle diameters and packing densities. Suitable dispersers are known.

Magnetic recording media of multilayer structure of the present invention are preferably applied by 1) initially applying a lower layer using a coater commonly used for magnetic coating such as gravure coater, roller coater, blade coater or extrusion coater and then applying an upper layer using a substrate-pressurizing extrusion coater disclosed in JP-B No. 46186/89 and JP-A Nos. 238179/85 and 265672/90 while the lower layer is still wet; or 2) almost simultaneously applying upper and lower layers using a single coating head incorporating two slits for passing coating liquids as disclosed in JP-A Nos. 88080/88, 17971/90 and 265672/90; or 3) almost simultaneously applying upper and lower layers using an extrusion coater having back-up rolls as disclosed in JP-A No. 174965/90. In order to prevent electromagnetic characteristics loss of magnetic recording media or the like due to aggregation of magnetic particles, coating liquids in the coating head should desirably be subjected to shearing by the method as disclosed in JP-ANos. 95174/87 and 236968/89. In addition, coating liquids should have a viscosity satisfying the numerical range disclosed in JP-A No. 8471/91. Sequential multilayer coating may also be naturally used to achieve the structure of the present invention without losing the effect of the present invention, by applying and drying a lower layer and then applying an upper layer thereon. However, the aforementioned simultaneous multilayer coating is preferably used to reduce coating defects and improve qualities such as dropout error.

According to the present invention, known orienters are preferably used such as a permanent magnet (for example, rare earth magnet such as Nd- or Sm-Co) and a solenoid alternately applying a magnetic field.

Preferably, calendering is performed by a plurality of passages between nips of a pair of a heat-resistant plastic roll made of epoxy, polyimide, polyamide, polyimide-amide or the like and a metal roll or between nips of a pair of metal rolls. The process temperature is preferably 80 °C or more, more preferably 85 °C or more. The linear pressure is preferably 200 Kg/cm or more, more preferably 300 Kg/cm or more.

[Physical characteristics]

Magnetic layers of magnetic recording media of the present invention have a saturated magnetic flux density of 200 mT or more but 600 mT or less when a ferromagnetic metal powder is used. Coercivity distribution is preferably narrower, and SFD is preferably 0.3 or less. Squareness is suitably 0.8 or more.

It will be readily appreciated that these physical characteristics can vary from lower layers to magnetic layers in magnetic recording media of the present invention to meet the purpose.

[EXAMPLES]

The following examples further illustrate the present invention without limiting the same thereto. As used herein, "parts" mean "parts by weight".

[Example 1]

| | |
|---|---|
| Coating liquid for upper layer | |
| Ferromagnetic powder A | 100 parts |
|     Fe/Co = 70/30 (atomic ratio) | |
|     Al/Fe = 11 at% | |
|     Y/Fe = 7 at% | |
|     Hc = 190,244 A/m (2390 Oe) | |
|     Average major axis length = 0.1 μm | |
|     σs = 145 A.m$^2$/kg | |
|     Crystallite size = 150 angstroms | |
|     Specific surface area ($S_{BET}$) = 48 m$^2$/g | |
| Vinyl chloride copolymer | 10 parts |
|     MR110 manufactured by Nippon Zeon, Co., Ltd. | |
| Polyurethane resin A | 5 parts |
|     Reaction product of a polyester polyol (MW 340) obtained by polycondensation of adipic acid/ 5-sulfoisophthalic acid/2,2-dimethyl-1,3-propanediol in a molar ratio of 90/10/100 and 2-butyl-2-ethyl-1,3-propandiol and 4,4'-diphenylmethane diisocyanate in a weight ratio of 100:30:133. | |
|     Tg = 78 °C | |
|     Number average molecular weight = 31,000 | |
|     Urethane content = 3.9 mmol/g | |
| Carbon black | 3 parts |
|     #50 manufactured by Asahi Carbon Co., Ltd. | |

(continued)

| | |
|---|---|
| Phenylphosphonic acid | 3 parts |
| Butyl stearate | 2 parts |
| Butoxyethyl stearate | 3 parts |
| Stearic acid | 1 parts |
| Methyl ethyl ketone | 180 parts |
| Cyclohexanone | 110 parts |

| | |
|---|---|
| Coating liquid for nonmagnetic lower layer | |
| Nonmagnetic powder α-iron oxide <br>    Specific surface area (BET) = 50 m$^2$/g pH = 9 | 100 parts |
|    Aluminum oxide is present on the surfaces at 1 % by weight expressed as Al atom on the basis of the total particles | |
| Vinyl chloride copolymer <br>    MR110 manufactured by Nippon Zeon, Co., Ltd. | 17 parts |
| Polyurethane resin B | 6 parts |
| Reaction product of a polypropylene glycol (MW 2000) and a polyester polyol (MW 2000, Tg = 55 °C) obtained by polycondensation of isophthalic <br>    acid/2,2-dimethyl - 1,3-propanediol/ethylene glycol in a molar ratio of 50/50/1 and <br>    2,2-dimethyl-1,3-propanediol and a sodium salt of bis(2-hydroxyethyl) -5-sulfoisophthalate and <br>    4,4'-diphenylmethane diisocyanate. <br>    Weight-average molecular weight = 34,000 Tg = 62 °C and -17 °C | |
| Carbon black <br>    #950B manufactured by Mitsubishi Chemical Corporation | 13 parts |
| Phenylphosphonic acid | 3 parts |
| Butyl stearate | 2 parts |
| Butoxyethyl stearate | 4 parts |
| Stearic acid | 1 parts |
| Methyl ethyl ketone | 200 parts |
| Cyclohexanone | 50 parts |

Various components of the coating for upper layer described above were kneaded and dispersed, and then mixed with a paste of α-alumina (HIT 60 A manufactured by Sumitomo Chemical Co., Ltd.) dispersed in a vinyl chloride copolymer (MR 110 manufactured by Nippon Zeon Co., Ltd.) (a paste consisting of 45 parts by weight of α-alumina, 5 parts by weight of the vinyl chloride copolymer, 30 parts by weight of methyl ethyl ketone and 20 parts by weight of cyclohexanone) in an amount of 5 parts expressed as α-alumina. The dispersion was further mixed with 5 parts of polyisocyanate and 40 parts of cyclohexanone, and the mixed dispersion was passed through a filter having an average pore diameter of 1 μm to prepare a coating liquid for upper layer. Various components of the coating liquid for lower layer described above were kneaded and dispersed, and then mixed with 13 parts of polyisocyanate and 40 parts of cyclohexanone, after which the mixed dispersion was passed through a filter having an average pore diameter of 1 μm to prepare a coating liquid for lower layer. The coating liquid for lower layer was subjected to intense kneading with a smaller amount of cyclohexanone than used during kneading of the coating for upper layer to have a higher film strength than that of the coating for upper layer.

Substrate

Substrate A was a polyethylene naphthalate web having a thickness of 8.5 μm, an average roughness relative to the center plane of 4.5 nm and a Young's modulus in the width direction of 870 kg/mm$^2$. Simultaneous multilayer coating was performed on one side of the substrate by using anextrusion-typecoatinghead to apply the coating liquid for lower layer in a dried thickness of 1.5 μm, and immediately then, the coating liquid for magnetic layer in a thickness of 0.3 μm thereon. The magnetic layer still wet was oriented in the longitudinal direction of the web between an Sm-Co magnet having a magnetic field strength of 600 mT and a solenoid of 400 mT and dried. Then, the other side of the substrate was coated with a known back coat solution containing a carbon black powder and a binder and dried into a thickness of 0.5 μm. Then, the assembly was passed through a calender combining a metal roll and a flexible roll at a roll temperature of 85 °C and linear pressure of 300 kg/m. Then, the calendered assembly was slit in a width of 1/2" and surface-polished with a polishing tape, and then wound around a feed reel in a cassette for the Sony HDCAM format.

[Example 2]

The sample of Example 2 was prepared in the same manner as in Example 1 except that the calendering temperature was 80 °C.

[Example 3]

The sample of Example 3 was prepared in the same manner as in Example 1 except that the calendering temperature was 90 °C.

[Example 4]

The sample of Example 4 was prepared in the same manner as in Example 1 except that the ferromagnetic powder in the coating for upper layer was replaced by ferromagnetic powder B of the following composition.

Ferromagnetic powder B
Fe/Co = 90/10 (atomic ratio)
Al/Fe = 4 at%
Y/Fe = 0 at%
Hc = 133,728 A/m (1680 Oe)
Average major axis length = 0.2 μm
$\sigma s$ = 133 A.m$^2$/kg
Crystallite size = 224 angstroms
Specific surface area ($S_{BET}$) = 38 m$^2$/g

[Comparative example 1]

The sample of Comparative example 1 was prepared in the same manner as in Example 1 except that the calender consisted of a combination of metal rolls.

[Comparative example 2]

The sample of Comparative example 2 was prepared in the same manner as in Example 1 except that the Young's modulus of the substrate in the width direction was 700 kg/mm$^2$.

[Comparative example 3]

The sample of Comparative example 3 was prepared in the same manner as in Example 1 except that the coating for lower layer was not applied and the coating for upper layer of Example 1 was applied in a coating thickness of 3.0 μm.

[Comparative example 4]

The sample of Comparative example 4 was prepared in the same manner as in Example 1 except that the coating for lower layer was not applied and the coating for upper layer of Example 4 was applied in a coating thickness of 3.0 μm.

[Comparative example 5]

The sample of Comparative example 5 (corresponding to a D5HD tape) was prepared in the same manner as in Example 1 except that the coating liquid for lower layer was not applied and the coating liquid for upper layer of Example 4 was replaced by ferromagnetic powder C of the following composition in a coating thickness of 3.0 μm.

Ferromagnetic powder C
Fe/Co = 85/15 (atomic ratio)
Al/Fe = 4 at%
Y/Fe = 1 at%
Hc = 144,872 A/m (1820 Oe)
Average major axis length = 0.1 $\mu$m
$\sigma$s = 139 A.m$^2$/kg
Crystallite size = 150 angstroms
Specific surface area (SBET) = 54 m$^2$/g

Table 1

| | Magnetic layer | | Nonmagnetic layer | Substrate | Calender | | Scratch depth | Young's modulus in tape width direction | Output (maximum) /output flatness | Durability |
|---|---|---|---|---|---|---|---|---|---|---|
| | Magnetic material | Thickness (μm) | Thickness (μm) | | Combination of rolls (partner to metal) | Temperature (°C) | (nm) | (kg/mm$^2$) | (dB)/(dB) | (hours) |
| Ex. 1 | A | 0.3 | 1.5 | A | Resin | 85 | 250 | 820 | 6.0/-1.0 | 8.2 |
| Ex. 2 | A | 0.3 | 1.5 | A | Resin | 80 | 295 | 810 | 5.5/-0.5 | 6.1 |
| Ex. 3 | A | 0.3 | 1.5 | A | Resin | 90 | 205 | 850 | 6.2/-1.3 | 5.3 |
| Ex. 4 | B | 0.3 | 1.5 | A | Resin | 85 | 245 | 830 | 3.0/-0.4 | 8.5 |
| Com. ex. 1 | A | 0.3 | 1.5 | A | Metal | 85 | 145 | 880 | 6.3/-4.5 | 0.3 |
| Com. ex. 2 | A | 0.3 | 1.5 | B | Resin | 85 | 250 | 660 | 5.0/-3.0 | 7.8 |
| Com. ex. 3 | A | 3.0 | - | A | Resin | 85 | 450 | 780 | 2.0/-1.1 | 7.0 |
| Com. ex. 4 | B | 3.0 | - | A | Resin | 85 | 440 | 770 | 0.0/-1.2 | 6.6 |
| Com. ex. 5 | C | 3.0 | - | A | Resin | 85 | 440 | 770 | 1.0/-1.0 | 6.6 |

14

As apparent from Table 1, magnetic recording media of Examples 1-3 showed high output and flatness as well as sufficient durability. Example 4 was excellent in flatness and durability though output was low.

Comparative example 1 satisfies the requirement of the present invention for the Young's modulus in the tape width direction, but scratch depth is too small. Although maximum output was high, flatness was unsatisfactory. Durability was also much inferior to those of Examples 1-4.

Comparative example 2 satisfies the requirement of the present invention for scratch depth, but the Young's modulus in the tape width direction is low. Although durability was excellent, flatness was unsatisfactory.

Comparative example 3 satisfies the requirement of the present invention for the Young's modulus in the tape width direction, but scratch depth is excessive. Although flatness and durability were excellent, output was unsatisfactory.

Comparative examples 4 and 5 satisfy the requirement of the present invention for the Young's modulus in the tape width direction, but scratch depth is excessive. Although flatness and durability were excellent, output was unsatisfactory.

[Test methods]

(1) Scratch depth: Scratch marks were made on the surface of each magnetic recording medium with a diamond needle using a surface analyzer TYPE-HEIDON-14 available from SHINTO Scientific Co., Ltd. and measured for depth with TOPO-3D manufactured by WYKO Corp., USA. Scratch conditions on the HEIDON analyzer were a scratch needle radius of 100 $\mu$R, a needle load of 15 g constant, a scratch rate of 10 cm/min, a scratch length of 3 cm and an environment at 23 °C, 50 %.

Depth is reported as the average of peak-valley distances in eight lines in an area of 250 $\mu$m x 250 pm around the center of scratch marks measured with a 256 x 256 pixel CCD using TOPO-3D with a 40x magnification lens.

(2) Young's modulus in tape width direction: Young's modulus was calculated from the load at 0.5 % elongation measured with a tensile tester manufactured by TOYO BALDWIN at a test speed of 200 mm/min.

(3) Output (maximum) and output flatness: The Sony HDCAM HDW-500 was used to record signals at a wavelength of 0.39 $\mu$m and then the maximum envelope of reproduction output was determined as output and output flatness was calculated by the following equation.

$$\text{Output flatness (dB)} =$$

$$20 \log (\text{minimum envelope/maximum envelope}).$$

(4) Durability: The Sony HDCAM HDW-500 was used for running in the still mode under an environment at 23 °C, 70 % to report durability as the time passed from the start of running to output drop to 50 % or less of the initial value.

Advantages of the invention

The present invention provides a magnetic recording medium comprising a lower layer containing a nonmagnetic powder and a binder and an upper layer containing a ferromagnetic powder and a binder provided on a substrate in this order wherein the surface of said recording medium has a scratch depth of less than 300 nm but 200 nm or more and said magnetic recording medium has a Young's modulus of 800 kg/mm$^2$ or more in the width direction, whereby a high-recording density and high-durability magnetic recording medium with improved output, head contact and durability can be obtained.

A magnetic recording medium with further high recording density can be obtained by using a magnetic layer preferably having a coercivity (Hc) of 159,200 A/m (2000 Oe) or more and a ferromagnetic powder having an average major axis length of 30-120 nm.

**Claims**

1. A magnetic recording medium comprising a lower layer containing a nonmagnetic powder and a binder provided and an upper layer containing a ferromagnetic powder and a binder provided on a substrate in this order wherein the surface of said upper layer has a flexibility represented by a scratch depth of less than 300 nm but 200 nm or more and said magnetic recording medium has a Young's modulus of 800 kg/mm$^2$ or more in the tape width direction.

2. The magnetic recording medium according to Claim 1 wherein said magnetic layer has a coercivity (Hc) of 159,200 A/m (2000 oersteds) or more.

3. The magnetic recording medium according to Claim 1 or 2 wherein said ferromagnetic powder has an average major axis length ranging from 30 to 150 nm.

4. The magnetic recording medium according to any one of Claims 1 to 3 wherein said magnetic layer has an average surface roughness relative to the center plane (SRa) ranging from 1.0 to 6.0 nm measured by an optical profiler.

European Patent
Office

**PARTIAL EUROPEAN SEARCH REPORT**    **Application Number**

which under Rule 45 of the European Patent Convention EP 00 12 7244
shall be considered, for the purposes of subsequent
proceedings, as the European search report

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| P,X | EP 1 049 076 A (FUJI PHOTO FILM CO LTD) 2 November 2000 (2000-11-02) * paragraph '0116! * | 1 | G11B5/70 G11B5/706 G11B5/73 G11B5/738 |
| X | & WO 99 38158 A 29 July 1999 (1999-07-29) | 1 | |
| X | US 5 958 565 A (HATTORI YASUSHI ET AL) 28 September 1999 (1999-09-28) * claim 1; examples 13,23 * | 1 | |
| X | US 5 510 168 A (MORI TAKAHIRO ET AL) 23 April 1996 (1996-04-23) * column 10, line 42 – line 51; table 1 * * column 11, line 5 – line 9 * | 1,3 | |
| X | US 5 419 961 A (KOBAYASHI OSAMU ET AL) 30 May 1995 (1995-05-30) * column 6, line 39 – line 52; tables * | 1 | |

**TECHNICAL FIELDS SEARCHED** (Int.Cl.7)

G11B

## INCOMPLETE SEARCH

The Search Division considers that the present application, or one or more of its claims, does/do
not comply with the EPC to such an extent that a meaningful search into the state of the art cannot
be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| THE HAGUE | 16 February 2001 | Heywood, C |

CATEGORY OF CITED DOCUMENTS

X : particularly relevant if taken alone
Y : particularly relevant if combined with another
    document of the same category
A : technological background
O : non–written disclosure
P : intermediate document

T : theory or principle underlying the invention
E : earlier patent document, but published on, or
    after the filing date
D : document cited in the application
L : document cited for other reasons
 
& : member of the same patent family, corresponding
    document

EPO FORM 1503 03.82 (P04C07)

| European Patent Office | INCOMPLETE SEARCH SHEET C | Application Number EP 00 12 7244 |
|---|---|---|

Claim(s) searched incompletely:
    1-4

Reason for the limitation of the search:

Present claims 1-4 relate to a product defined (inter alia) by reference to the following parameter:
P1:flexibility represented by a scratch depth of less than 300 nm but 200 nm or more. The use of this parameter in the present context is considered to lead to a lack of clarity within the meaning of Article 84 EPC. It is impossible to compare the parameter the applicant has chosen to employ with what is set out in the prior art. The lack of clarity is such as to render a meaningful complete search impossible. Consequently, the search has been restricted to the content of the claims but excluding the scratch depth parameter.

**ANNEX TO THE EUROPEAN SEARCH REPORT
ON EUROPEAN PATENT APPLICATION NO.**

EP 00 12 7244

This annex lists the patent family members relating to the patent documents cited in the above-mentioned European search report.
The members are as contained in the European Patent Office EDP file on
The European Patent Office is in no way liable for these particulars which are merely given for the purpose of information.

16-02-2001

| Patent document cited in search report | | Publication date | Patent family member(s) | | Publication date |
|---|---|---|---|---|---|
| EP 1049076 | A | 02-11-2000 | JP | 11213377 A | 06-08-1999 |
| | | | JP | 11259851 A | 24-09-1999 |
| | | | WO | 9938158 A | 29-07-1999 |
| US 5958565 | A | 28-09-1999 | JP | 9293229 A | 11-11-1997 |
| | | | JP | 9305952 A | 28-11-1997 |
| | | | JP | 10011736 A | 16-01-1998 |
| | | | JP | 10027333 A | 27-01-1998 |
| | | | JP | 10134343 A | 22-05-1998 |
| | | | JP | 10134337 A | 22-05-1998 |
| US 5510168 | A | 23-04-1996 | JP | 6176345 A | 24-06-1994 |
| US 5419961 | A | 30-05-1995 | JP | 3033877 B | 17-04-2000 |
| | | | JP | 6215350 A | 05-08-1994 |

EPO FORM P0459

For more details about this annex : see Official Journal of the European Patent Office, No. 12/82